(19) Europäisches Patentamt / European Patent Office / Office européen des brevets

(11) **EP 2 689 113 B1**

(12) **EUROPEAN PATENT SPECIFICATION**

| | |
|---|---|
| (45) Date of publication and mention of the grant of the patent:<br>**23.01.2019 Bulletin 2019/04** | (51) Int Cl.:<br>***F01M 1/08*** *(2006.01)*      ***F02F 1/20*** *(2006.01)* |
| (21) Application number: **12761479.0** | (86) International application number:<br>**PCT/DK2012/050088** |
| (22) Date of filing: **22.03.2012** | (87) International publication number:<br>**WO 2012/126480 (27.09.2012 Gazette 2012/39)** |

(54) **INJECTION OF CYLINDER LUBRICATING OIL INTO DIESEL ENGINE CYLINDERS**

INJEKTION EINES ZYLINDERSCHMIERÖLS IN EINEN DIESELMOTORZYLINDER

INJECTION D'HUILE DE LUBRIFICATION DE CYLINDRE DANS DES CYLINDRES DE MOTEUR DIESEL

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR** | (74) Representative: **Nielsen, Leif et al**<br>**Patrade A/S**<br>**Ceresbyen 75**<br>**8000 Aarhus C (DK)** |
| (30) Priority: **22.03.2011 DK 201170135** | (56) References cited:<br>**EP-A1- 1 350 929     EP-A1- 1 350 929**<br>**WO-A1-00/28194     JP-A- 7 317 519**<br>**JP-A- 7 317 519     JP-A- 2006 029 123**<br>**JP-A- 2006 029 123     JP-A- 2010 025 068**<br>**JP-A- 2010 025 068** |
| (43) Date of publication of application:<br>**29.01.2014 Bulletin 2014/05** | |
| (73) Proprietor: **Hans Jensen Lubricators A/S**<br>**9560 Hadsund (DK)** | |
| (72) Inventor: **BAK, Peer**<br>**DK-9300 Sæby (DK)** | |

**Description**

**Field of the Invention**

The present invention concerns an injector for injecting cylinder lubricating oil into large cylinders in a diesel engine, e.g. in marine engines, and for use in an injector system where a number of injectors are arranged in a cylinder wall and in a plane perpendicular to the axis of said cylinder for delivering lubricating oil jets onto said cylindrical wall and where said injector includes an injector housing and a nozzle tip provided in continuation of the injector housing, the nozzle tip provided at its outer free end with several nozzle apertures for delivering several lubricating oil jets in respective different directions.

**Background of the Invention**

EP 1 350 929 discloses a lubricating oil system with at least injectors for injecting cylinder lubrication oil in large diesel engine cylinders, e.g. in marine engines. Each injector is adapted with several nozzle apertures in order that several compact lubricating oil jets can be delivered from each injector and where the lubricating oil is applied helically to the cylinder wall. The lubricating oil can be injected at various orientations such that there is coincidence at either an inwardly directed angle in the cylinder or and upwardly directed angle in the cylinder. A sectional plane showing all lubricating oil jets or sprays can thus be laid. The oil is typically delivered in an upwardly swirling direction, e.g. a 20° angle upward. The injectors are evenly distributed in the annular area such that the lubricating oil is evenly distributed on an area corresponding to the peripheral distance between two injectors.
WO 00/28194 discloses a lubricating oil system with injectors adapted for injecting cylinder lubricating oil in the form of an atomised spray which is also evenly distributed in the annular area. The atomised cylinder lubricating oil is thus distributed in the same way corresponding to the spacing between two injectors.
However, it has appeared that circumstances in reality can make implementation of the injectors described in the introduction difficult since it is not possible to mount injectors evenly distributed in each of the lubricating oil dosing holes existing in a cylinder wall for space reasons. For example, location of the stay bolts of the cylinder may thus entail that it is not possible to mount an injector in all dosing holes if stay bolts are located just opposite the existing dosing holes.
Hence there are engines where there is no space for placing new injectors in each position where it is desired to position dosing holes evenly distributed in the annular area. This may be due to application of an integrated duct system for transporting the lubricating oil to the cylinder wall.
To this is added that with regard to reducing costs of installation, by running operation and maintenance there is a general wish for having the fewest possible components and therefore also the fewest possible injectors.

**Object of the Invention**

It is the object of the present invention to indicate an injector and a use of such injector in a dosing system that overcomes the drawbacks of the prior art system and which enable an even distribution of cylinder lubricating oil.

**Description of the Invention**

According to the present invention, this is achieved by an injector of the type specified in the introduction which is peculiar in that the nozzle apertures are provided under different angles radially relative to a centre line through the nozzle tip as well as axially relatively to a plane perpendicular to the centre line of the nozzle tip and that the nozzle apertures with the largest angle relative to the plane perpendicular to the centre line of the nozzle tip are disposed closest to the injector housing, whereby it is obtained that the centre of the lubricating oil jets strike, on said cylinder wall, at the same level above the injector but at different areas of a periphery of said cylinder wall.
The injector according to the present invention may be used in a dosing system for injecting cylinder lubricating oil into large cylinders in a diesel engine, e.g. in marine engines, where a number of injectors are arranged in a cylinder wall and in a plane perpendicular to the axis of said cylinder. Each injector includes an injector housing and a nozzle tip provided in continuation of the injector housing, the nozzle tip provided at its outer free end with several nozzle apertures for delivering several lubricating oil jets from each injector in respective different directions onto said cylinder wall. The dosing system is peculiar in that the nozzle apertures are provided under different angles radially relative to a centre line through the nozzle tip as well as axially relatively to a plane perpendicular to the centre line of the nozzle tip such that the centre of the lubricating oil jets strike, on said cylinder wall at the same level above the injectors but at different areas of the periphery of said cylinder wall and that the nozzle apertures with the largest angle relative to the plane perpendicular to the centre line of the nozzle tip are disposed closest to the injector housing.
The injector according to the present invention may be used in a method for injecting cylinder lubricating oil into large cylinders in a diesel engine, e.g. in marine engines, where the lubricating oil is delivered to the cylinder wall by a number of injectors arranged in a cylinder wall and in an annular area in a plane perpendicular to the axis of said cylinder, and where each injector includes an injector housing and a nozzle tip provided in continuation of the injector housing, the nozzle tip provided at its outer free end with several nozzle apertures for delivering several lubricating oil jets from each injector in respective different directions onto said cylinder wall. The method is peculiar in that the lubricating oil jets are injected under different angles radially relative to a centre line through the nozzle tip as well as axially relatively to a plane perpendicular to the centre line of the nozzle tip such that the centre of the lubricating oil jets strike, on said cylinder wall, at the same level above the injectors but at different areas of the periphery of said cylinder wall and that the nozzle apertures with the largest angle relative to the plane perpendicular to the centre line of the nozzle tip are disposed closest to the injector housing and such that a nozzle aperture which is to deliver an oil jet with the longest transport path will be disposed closest to the injector housing, and a nozzle aperture with the second longest transport path will be disposed second closest to the injector housing, and so forth.

On engines where previously it was not possible to fit this type of spray or jet lubrication for space reasons, by the present invention it is now possible to apply this solution with consequent advantages, which i.a. also can entail a reduced lubricating oil consumption.

The number of components is reduced, simplifying installation, operation and maintenance of the entire system. Significant economic improvements are thereby attained.

Improved distribution of lubricating oil is achieved by spray lubrication due to the possibility of establishing different droplet sizes, depending on the length of the distance travelled by the oil from a nozzle aperture to the cylinder wall.

The dosed amount delivered per injector becomes larger whereby the dosing becomes more accurate and easier to regulate. Furthermore, this means that in lesser engines it becomes possible to combine this type of injector with different systems for automatic dosing of lubricating oil amounts and different regulating units as the amounts of lubricating oil as a minimum become twice as large as the amounts by traditional injectors with only one nozzle aperture per injector. The amounts of lubricating oil may be critical as the dosing of lubricating oil per pump stroke by the lubricating oil pump as dosing of the lubricating oil is typically put in relation to the yield per cylinder of the engine.

Moreover, by using an injector according to the invention, it also becomes easier to combine the injector with prior art systems/units for flow measurement. Typically, it is difficult to measure very small flows. By a system according to the invention, as a minimum there will be a doubling of the measured amount of lubricating oil compared with traditional injector with only one nozzle aperture per injector. This provides new and improved possibilities in connection with flow measurements.

The amount of dosed lubricating oil is increased per injector whereby the individual lubricating point can build up a higher delivery pressure in case of commencing clogging by dirt, thereby reducing the risk of blockage.

Each injector may thus have two or more nozzle apertures. Since none of the nozzle apertures have the same angle axially or radially to the plane perpendicular to the centre line of the nozzle tip, the angle of the lubricating oil jets in upward or inward angle in the cylinder will vary. The centre of the lubricating oil jets will hereby, irrespective of being compact jets or atomised sprays, be delivered at the same level above the injectors but at different areas of the periphery of the cylinder wall. An injector can hereby replace one or two traditional injectors irrespective whether they are adapted as prior art atomiser nozzles or traditional nonreturn valves.

By two nozzle apertures, the angles will be laid such that the centres of the oil jets strike at the same level above the injectors but distributed across a peripheral distance corresponding to a distance of one or two times the length of the peripheral spacing between two injectors.

In a cylinder the injector can be disposed asymmetrically with an uneven distribution in the annular area. Injectors that are different, both regarding the number of nozzle apertures and the angle of these nozzle apertures, may then be used for establishing an even distribution of the lubricating oil on the peripheral area of the cylinder.

However, if so desired the injectors can be distributed symmetrically with even distribution in the annular area as well, e.g. with regard to reducing the number of components.

It is thus possible to use injectors which are not evenly distributed in the annular area in a cylinder to establish an even distribution of the cylinder lubricating oil along a peripheral area in the cylinder.

When using several nozzle apertures in the same injector there is a need for operating with different oil jets. This is particularly necessary when the lubricating oil is to be transported relatively far. These differences in the character of the oil jets can be achieved by various principles or by combining various principles.

The nozzle apertures with the largest angle relative to the plane perpendicular to the centre line of the nozzle tip are disposed closest to the injector housing. A nozzle aperture which is to deliver an oil jet with the longest transport path will be disposed closest to the injector housing, and a nozzle aperture with the second longest transport path will be disposed second closest to the injector housing, and so forth. The greatest pressure thereby occurs in nozzle apertures which are to deliver the lubricating oil farthest from the injector. As none of the angles coincide, the oil jets can cross without colliding.

According to a further embodiment according to the invention, the injector is peculiar in that the nozzle apertures are provided with different sizes, respectively.

According to a further embodiment according to the invention, the injector is peculiar in that the largest nozzle apertures are disposed closest to the injector housing.

According to a further embodiment according to the invention, the injector is peculiar in that the nozzle apertures of the injector have different sizes such that the contact surface of a lubricating oil jet, preferably in the form of an atomised spray, on the cylinder wall becomes proportional with the nozzle aperture and thus the dosed amount of lubricating oil.

According to a further embodiment according to the invention, the injector is peculiar in that the nozzle apertures of the injector have different sizes such that different lubricating oil jets in the form of atomised sprays are provided different droplet sizes, respectively, and such that the spray with shortest path is provided lesser droplets and the spray with the longest path is provided larger droplets.

When the nozzle apertures have different diameter, it is preferred that the nozzle aperture farthest from the injector housing is the largest and that the nozzle aperture second farthest from the injector housing is the second largest, and so forth. Intensity in a compact oil jet and the droplet size in a spray to be transported the farthest distance will hereby be greater than that of jets/sprays to be transported a shorter distance.

Due to the larger nozzle aperture, the oil jet to be transported farthest will get a greater part of the lubricating oil, corresponding to the fact that this oil jet also covers a greater area and part of the periphery. The oil jet to be transported the shortest distance will cover the area closest to the injector.

According to a further embodiment of the invention, the injector is peculiar in that the injector includes an integrated valve with a valve body and a valve seat for opening and closing the injection. This is a particularly simple design which reduces the number of components compared with using separate valves connected with the injector.

According to a further embodiment of the invention, the injector is peculiar in that the valve is an atomising valve and that the valve seat is provided between the valve body and the nozzle apertures. The present invention will hereby be particularly suited for use in systems of the type described in the above mentioned WO 00/28194 or in other systems operating with atomisation of the lubricating oil.

According to a further embodiment of the invention, the injector is peculiar in that the valve is a nonreturn valve and that the valve body is provided between the valve seat and the nozzle apertures. The present invention will hereby be particularly suited for use in systems of the type described in the above mentioned EP 1 350 929 or in other systems operating with injection of the lubricating oil as a compact oil jet.

According to a further embodiment, the injector according to the invention is peculiar by including two nozzle apertures. This is a particularly simple technical design which can allow for an even distribution of lubricating oil in many systems where it is not possible to arrange the injectors evenly distributed in the annular area.

An injector will be disposed in a cutout in the cylinder wall such that the outer free end of the nozzle tip is located within the cylinder wall. In the cutout is therefore provided an inclined design so that all oil jets/sprays are injected at a small angle relative to a tangential plane for the cylinder such that they hit the cylinder wall. Dosing of the lubricating oil by a method and by an injector according to the invention is to be performed earlier than by traditional systems with even distribution of the lubricating oil by evenly distributed injectors as the lubricating typically is to be transported relatively far. The oil is typically delivered before the piston passes during the upward movement.

The amount of lubricating oil dosed by an injector depends on the number of oil dosing apertures and thereby by the number of injectors substituted by the applied injectors according to the invention.

For delivery of the lubricating oil there is to be used a lubricating system, e.g. as described in EP 2 044 300 or in EP 1 426 571.

One or more types of injectors where the number of nozzle apertures vary as well as where the distribution of the various injectors vary can be used in a cylinder.

The supply pressure in a dosing system where two sprays of atomised lubricating oil are used is typically to be regulated (e.g. 50-100 bar) such that the lubricating oil is atomised, and for a cylinder with:

-   6 lubrication points an injector covers minimum 1/3 of the periphery;
-   8 lubrication points an injector covers minimum 1/4 of the periphery;
-   10 lubrication points an injector covers minimum 1/5 of the periphery.

## Description of the Drawing

The invention will now be explained in detail with reference to the accompanying drawing, where:

Fig. 1   shows a sectional view through a cylinder where disposition of stay bolts causes that an injector cannot be mounted in each of the existing lubricating oil dosing holes;

Fig. 2   shows the cylinder of Fig. 1 in which an injector according to the invention is provided in 4 out of 8 original lubricating oil dosing holes;

Fig. 3    shows a schematical partial view of a dosing system, and where an injector with two nozzle apertures injecting oil sprays at various inward and upward angles in the cylinder is applied;

Fig. 4    shows a schematic view of an injection pattern for the cylinder shown in Fig. 2 when using the injectors according to the invention;

Fig. 5    shows partial detail views of an injector according to the invention with two nozzle apertures; and

Fig. 6    shows schematic views of a spray pattern and illustrating the intensity of the distribution of the lubricating on the cylinder wall.

## Detailed Description of the Invention

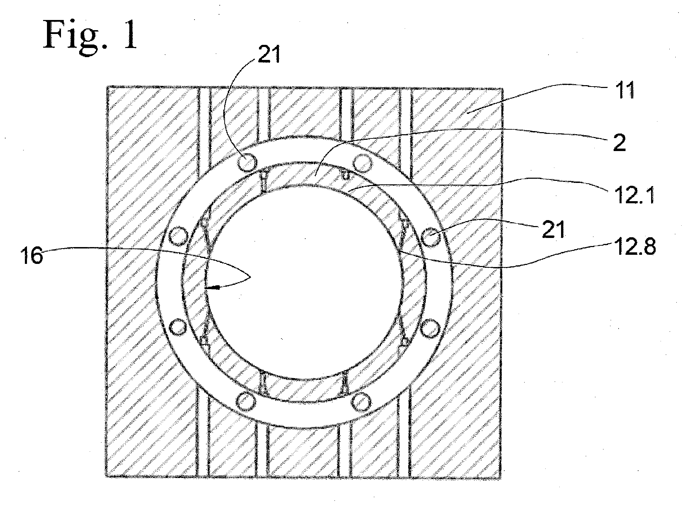

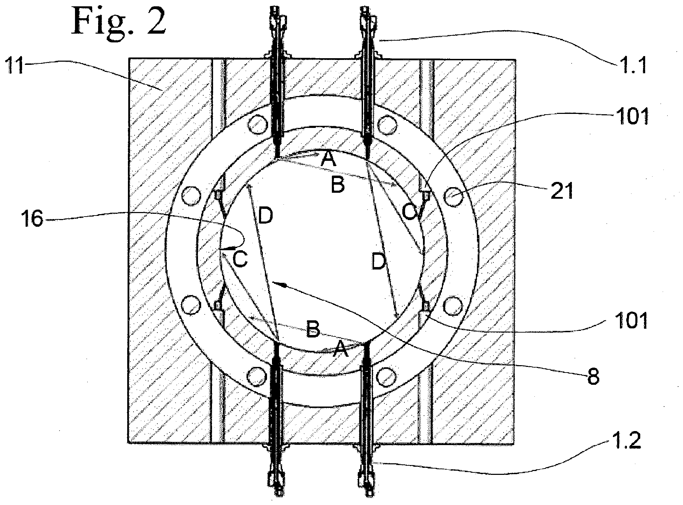

Fig. 1 shows an example of a cylinder 2 with eight lubricating oil dosing holes 12 disposed uniformly in the peripheral direction of the cylinder in a plane perpendicular to the centre axis of the cylinder and corresponding to the plane of the paper. The disposition of stay bolt 21 causes that an injector (see Fig. 2) cannot be mounted in all existing lubricating oil dosing holes 12 as four of the eight stay bolts 21 are located oppositely the existing lubricating oil dosing holes 12.

The basis of the embodiment to be described with reference to the subsequent Figures is thus the prior art engine shown in Fig. 1 depicting a cylinder 2 which is equipped with eight lubricating oil dosing holes 12.

Eight lubricating oil dosing holes 12.1 to 12.8 are shown which are used for traditional nonreturn valves (not shown) used for delivering the cylinder lubricating oil in through the lubricating oil dosing holes 12. The piston in the cylinder is then used for distributing the lubricating oil. Furthermore, the engine block 11 itself is shown.

When this engine is to be modified by mounting other injector types that are adapted to delivering the lubricating oil directly or indirectly on the cylinder wall 16 before passage of the piston, challenges with regard to space arise. For example, the shown lubricating oil dosing hole 12.8 cannot be reached in radial direction since one of the cylinder stay bolt 21 is in the way.

Fig. 2 shows the cylinder 2 shown in Fig. 1, where previously the lubricating oil was supplied via eight nonreturn valves through the eight lubricating oil dosing holes 12.1. to 12.8, now adapted with an injector 1 which is provided in four of the lubricating oil dosing holes only. The cylinder 2 is now lubricated through four injectors 1 which are of the type for injecting atomised lubricating oil, each delivering two sprays.

Two types of injectors 1.1 and 1.2 are used. The difference between them are the angles for injecting the sprays, enabling individual sprays (A, B, C and D) at a given level on the cylinder wall 16 above the injectors 1 to strike the cylinder wall such that an even distribution of the lubricating oil in the periphery occurs.

The lubricating dosing holes 101 not in use are of course to be covered. This may be effected, for example, by letting the original nonreturn valves stay as blind plugs.

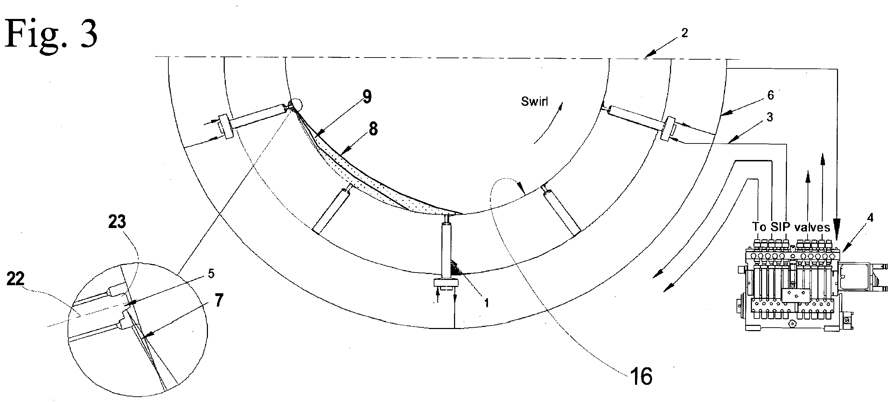

Fig. 3 shows a so-called SIP injector 1 which at its inner end has a nozzle with two nozzle apertures that inject atomised sprays of lubricating oil at various inward and upward angles in the cylinder. A symmetric disposition of the injectors 1 in every other lubricating oil dosing hole is shown. However, asymmetrically arranged injectors may applied just as well, such as shown in Fig. 2 where single sprays A, B, C, and D are injected with the spray pattern 8 shown in Fig. 2.

Fig. 3 shows a dosing system. A traditional mechanical lubricating apparatus 4 is used which is mechanically connected to the drive of the ship. Hereby is achieved that the mechanical apparatuses 4 run synchronously with the engine. On large engines one mechanical lubricating apparatus 4 per cylinder 2 is typically applied. A number of injectors 1, typically in a number of 6 to 10, are located in each cylinder. For each injector 1 is provided an oil supply pipe 3 connecting the lubricating apparatus 4 with individual lubricating oil pumps to the individual injector 1 via nonreturn valves incorporated in the lubricating apparatus.

Moreover, a return pipe 6 for conducting excess drain oil from the injectors 1 back to the lubricating apparatus 4 is shown.

In each cylinder 2 there are a number of oil dosing holes 12 for the injectors 1. For each injector 1 there is provided a cutout 7 such that nozzle apertures disposed at the free end 23 of a nozzle tip 5 in the injector can deliver the lubricating oil onto the cylinder wall 16. On Fig. 3 appears atomised oil 9 which is injected in a spray pattern 8 from the injector 1. The spray pattern 8 includes two different sprays, in principle corresponding to sprays from the injector 1.1 on Fig. 2 with the two sprays C and D.

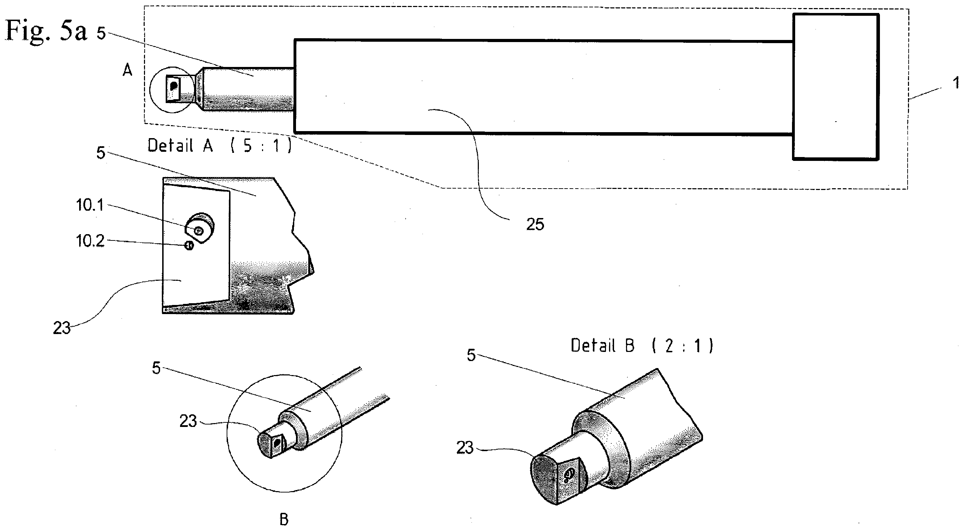

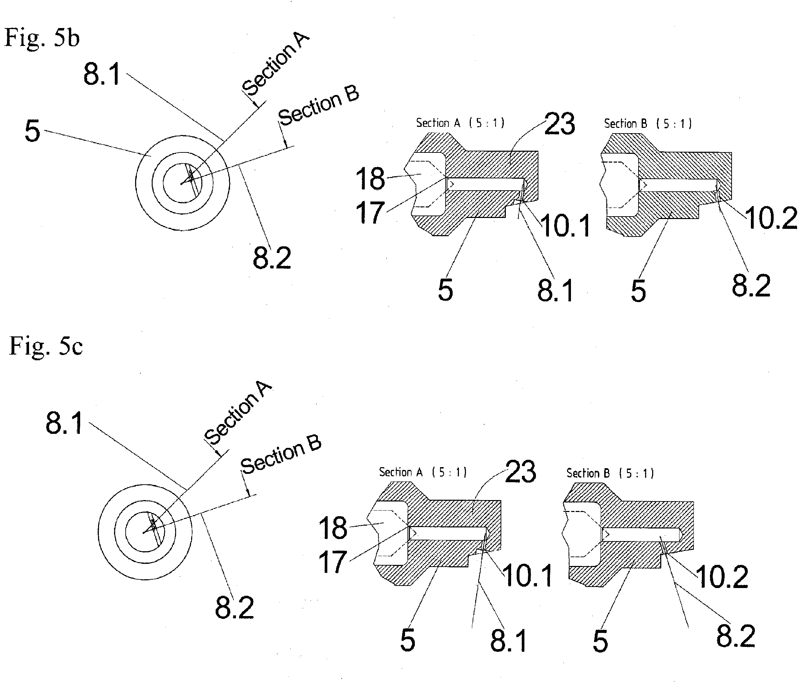

In the enlarged view at the lower left corner is seen that the nozzle apertures 10 (see Fig. 5) are provided at different angles radially relative to a centre line 22 through the nozzle tip 5 as well as axially relatively to a plane perpendicular to the centre line 22 of the nozzle tip. This fact can also be expressed in that the two nozzle apertures 10 spray at different inward and upward angles in the cylinders. The centre of the lubricating oil jets C and D thus will be provided on the cylinder wall 16 at the same level above the injectors 1 but at different areas of the periphery of the cylinder wall.

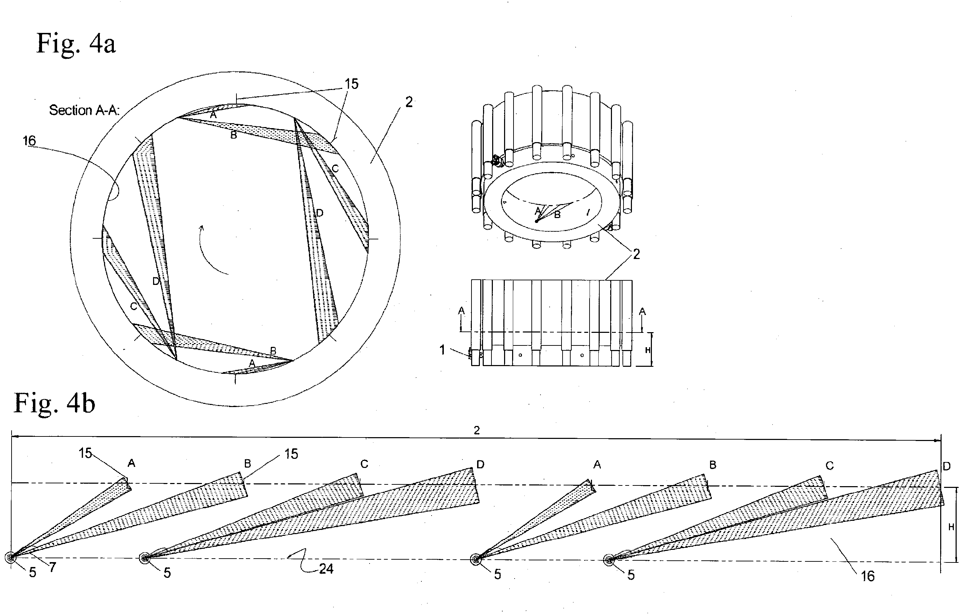

Fig. 4 shows in principle a spray pattern 8 from Fig. 2 (as seen from above in Fig. 4a). It is shown in a plane perpendicular to the cylinder axis where all sprays (A, B, C, and D) strike the cylinder wall 16. Imaginary sighting points 15 are shown which the individual sprays A, B, C, D are laid for. The centre of the sprays will thus strike evenly distributed on the periphery of the cylinder wall. The sprays A, B, C and D are directed upwardly with an orientation typically corresponding to the angle of the helically shaped and upward going air flow (swirl) arising in the cylinder when the piston is moved towards the top position.

In Fig. 4b, the same cylinder 2 is shown but in an unfolded version. It appears from Fig. 4b that it is decided the centre/sighting points 15 of the sprays strike the cylinder wall 16 at a level above the plane 24 at which all injectors 1 are mounted with the nozzle tips 5 disposed in the cutouts 7.

The imaginary sighting points 15 are further marked on the unfolded cylinder wall 16. When looking at the unfolded view it appears that the emitted sprays are in danger of colliding. But when the view in Fig. 4b is combined with the view in Fig. 4a, it is clearly seen that the sprays do not collide. This fact can also be expressed in that the two nozzle apertures 10 spray at different inward and upward angles in the cylinders.

Moreover, on Fig. 4b is seen a cutout 7 around each nozzle tip 5 on the injectors 1 in question. These cutouts enable that the nozzle tip 5 can be disposed under the surface of the cylinder wall 16 in order thereby to enable delivery of the lubricating oil without nozzle tip 5 protruding into the cylinder.

Fig. 5 shows enlarged and more detailed views of the injector 1. This has a nozzle tip 5 with two nozzle apertures 10.1 and 10.2. In Fig. 5 is only shown two nozzle apertures 10, but more than two nozzle apertures are possible without problems. It appears that a valve with a valve body 18 is provided in the nozzle tip 5 interacting with a valve seat 17 for opening and closing the injection through the two nozzle apertures 10.1 and 10.2.

On Fig. 5b is seen that the nozzle 5 emits two sprays 8.1 and 8.2 which can be different, depending on whether the injector corresponds to spray A/B or to C/D, respectively. In the view to the left the injector 1 is viewed from the centre of the cylinder 2, and here it appears that the upwardly directed angle is different by the two sprays 8.1 and 8.2, and that spray 8.1 has the largest upwardly directed angle. In the same way it appears in the sectional views A and B that the inwardly directed angle is largest on spray 8.2, i.e. it has the largest angle relative to a tangential injection.

On Fig. 5c is shown an embodiment where the spray 8.2, which has the longest transport path before directly or indirectly coming in contact with the cylinder wall 16, exits the nozzle aperture 10.2 located closest to the valve seat 17. And correspondingly that the spray 8.1, which has the shortest transport path before directly or indirectly coming in contact with the cylinder wall 16, exits the nozzle aperture 10.1 located farthest away from the valve seat 17.

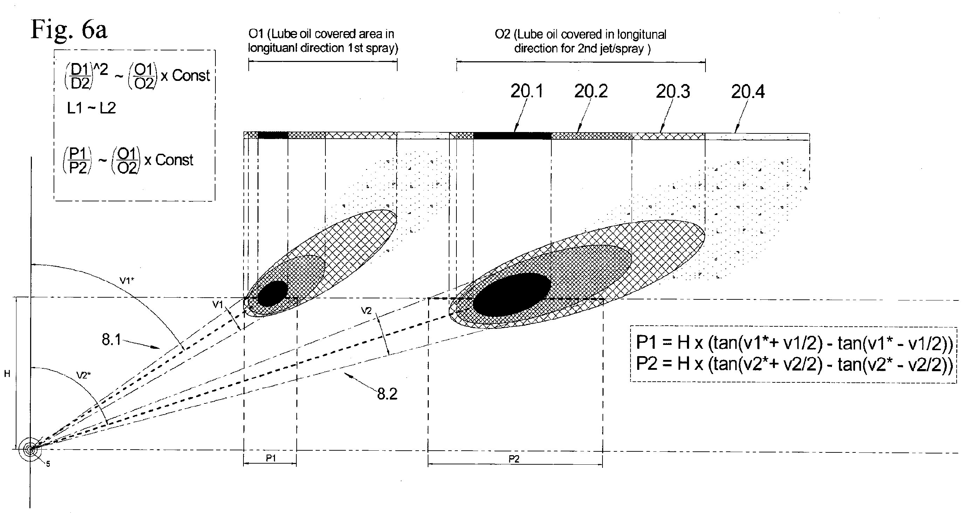

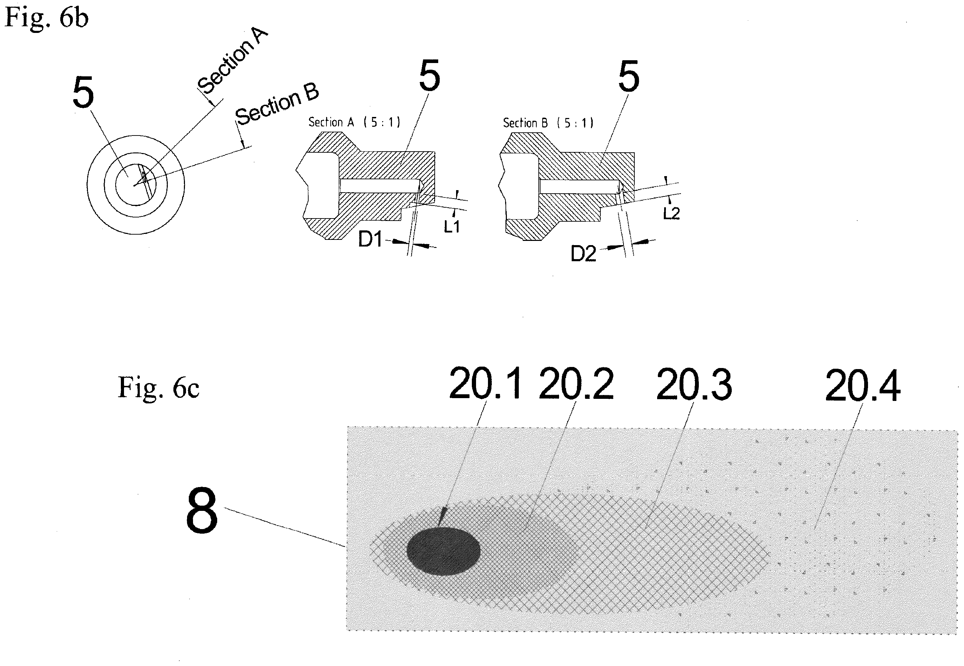

Fig. 6 (6a, 6b and 6c) shows a spray pattern 8 with the two sprays 8.1 and 8.2 where the spread of lubricating oil on the cylinder wall 16 is graduated according to intensity such that there appears:

- high intensity area 20.1;
- medium intensity area 20.2 with full coverage of oil;
- sporadically covered area 20.3 appearing with larger areas, where many part areas are fully covered and with single droplets in between;
- lightly and sporadically covered area 20.4 with preferably single droplets and/or atomised oil particles.

At the top of Fig. 6 is shown a view of the degree of coverage as seen from above and as a summation. By adding the areas 20.1, 20.2 and 20.3 together, there is defined a peripheral distance with coverage. Depending on the upwardly and inwardly directed angles of the injected sprays, the "impression" on the cylinder wall 16 will vary. In the shown example it appears that the summation of the areas 20.1, 20.2 and 20.3 are also called O1 for spray 8.1 and 02 for spray 8.2, respectively.

An alternative embodiment to the previously presented embodiments could be that different sizes are used on the nozzle apertures 10. In this way, instead of delivering the same amount of lubricating oil out through all nozzle apertures 10, a basis of distribution can be made such that the relation between O1 and 02 also becomes an expression for the relationship of delivered amount of lubricating oil. On Fig. 6b is shown an approximated theoretical way P1/P2 of calculating this relationship by looking at the contact distance at the level H above the plane 24 for the injectors 1. Subsequently, the size of the nozzle apertures 10.1 and 10.2 are adapted correspondingly.

$$(D1/D2)^2 \sim (O1/O2) \text{ x constant} \sim (P1/P2) \text{ x constant}$$

By approximation it is assumed that "duct lengths" L1 and L2 on the nozzle apertures 10.1 and 10.2 are equally long and that the geometrical conditions are the same for the two nozzle apertures 10.1 and 10.2.

If the direct spread on the cylinder wall 16 from spray 8.2 is twice as large as spray 8.1, the lubricating oil amount is also to be distributed which in turn means that the nozzle aperture 10.2 is to be greater than nozzle aperture 10.1. If nozzle aperture 10.1 is Ø 0.3 mm, nozzle aperture 10.2 should be about Ø 0.42mm. Hereby, a distribution of the lubricating oil amount corresponding to the relationship between the peripheral distance covered by the two sprays 8.1 and 8.2 will appear such that an approximately even distribution of the lubricating oil on the cylinder wall 16 will occur.

Moreover, it appears on Fig. 6 that various amounts have been dosed such that the spray 8.2 covers about twice the area covered by the spray 8.1. Comparing the spread on the cylinder wall from the two sprays for the total area of 20.1, 20.2 and 20.3, the area for spray 8.2 is about twice as large as the area for spray 8.1.

On Fig. 6 is shown that sprays 8.1 and 8.2 may have different cone angles V1 or V2, but in principle they can all have the same cone angle. Furthermore, in Fig. 6a is indicated an angle V1* and V2* for orientation of a centre line in the spray 8.1 and 8.2, respectively. The centre lines shown by broken lines are directed towards the previously mentioned sighting point 15 (see Fig. 4b). The angles of the centre lines are indicated relative to the centre axis of the cylinder. When knowing the level H, which is the vertical distance between the plane 24 (see Fig. 4b) with the injectors 1, and the new plane where the sighting points 15 (see Fig. 4b) are located, and knowing the spray geometry represented by the angles V1, V2, V1* and V2*, then it is possible to estimate the peripheral distance that the two sprays 8.1 and 8.2 will cover on the cylinder wall 16.

If the nozzle apertures 10.1 and 10.2 have the same diameter (D1 and D2) the dosed amounts of lubricating oil will be about the same. If it is desired to make a relative distribution of the lubricating oil amount relative to the area "swept" by respective sprays, the peripheral distances P1 and P2 can be used as a basis of distribution. Based on this fact it is possible to calculate different diameters of the nozzle apertures 10.1 and 10.2. This method can for example be applied when the cone angles V1 and V2 for the two sprays have been determined by empirical experiments. The angles V1 and V2 will typically be with a size relatively close to each other. However, this depends on the number of nozzle apertures and the areas that they are to "sweep". This method will ensure a very uniform distribution of the lubricating oil on the cylinder wall.

## Claims

1. An injector for injecting cylinder lubricating oil into large cylinders in a diesel engine, e.g. in marine engines, and for use in an injector system where a number of injectors are arranged in a cylinder wall and in a plane perpendicular to the axis of said cylinder for delivering lubricating oil jets onto said cylindrical wall and where said injector includes an injector housing and a nozzle tip provided in continuation of the injector housing, the nozzle tip provided at its outer free end with several nozzle apertures for delivering several lubricating oil jets in respective different directions, **characterised in that** that the nozzle apertures are provided under different angles radially relative to a centre line through the nozzle tip as well as axially relatively to a plane perpendicular to the centre line of the nozzle tip and that the nozzle apertures with the largest angle relative to the plane perpendicular to the centre line of the nozzle tip are disposed closest to the injector housing, whereby it is obtained that the centre of the lubricating oil jets strike, on said cylinder wall, at the same level above the injector but at different areas of a periphery of said cylinder wall.

2. Injector according to claim 1, **characterised in that** the nozzle apertures are provided with different sizes.

3. Injector according to claim 2, **characterised in that** the largest nozzle apertures are disposed closest to the injector housing.

4. Injector according to any preceding claim, **characterised in that** the nozzle apertures of the injector have different sizes such that the contact surface of a lubricating oil jet, preferably in the form of an atomised spray, on the cylinder wall becomes proportional with the nozzle apertures and thus the dosed amount of lubricating oil.

5. Injector according to any preceding claim, **characterised in that** the nozzle apertures of the injector have different sizes such that different lubricating oil jets in the form of atomised sprays are provided different droplet sizes, respectively, and such that the spray with shortest path is provided lesser droplets and the spray with the longest path is provided larger droplets.

6. Injector according to any preceding claim, **characterised in that** the injector includes an integrated valve with a valve body and a valve seat for opening and closing the injection.

7. Injector according to claim 6, **characterised in that** the valve is an atomising valve and that the valve seat is provided between the valve body and the nozzle apertures.

8. Injector according to claim 6, **characterised in that** the valve is a nonreturn valve and that the valve body is provided between the valve seat and the nozzle apertures.

9. Injector according to any preceding claim, **characterised by** including two nozzle apertures.

10. Use of an injector according to any preceding claim in a dosing system for injecting cylinder lubricating oil into large cylinders in a diesel engine, e.g. in marine engines, where a number of injectors are arranged in a cylinder wall and in a plane perpendicular to the axis of said cylinder

**Patentansprüche**

1. Injektor zum Injizieren eines Zylinderschmieröls in die großen Zylinder in einem Dieselmotor, z.B. bei Schiffsmotoren, und zur Verwendung in einem Injektorsystem, wobei eine Reihe von Injektoren in einer Zylinderwand und in einer senkrecht zur Achse des Zylinders befindlichen Ebene zum Abgeben von Schmierölstrahlen auf die Zylinderwand angeordnet sind, und wobei der Injektor ein Injektorgehäuse und eine Düsenspitze umfasst, die in Fortführung des Injektorgehäuses bereitgestellt ist, wobei die Düsenspitze an ihrem äußeren freien Ende mit mehreren Düsenöffnungen zum Abgeben von mehreren Schmierölstrahlen in entsprechend unterschiedliche Richtungen versehen ist, **dadurch gekennzeichnet, dass** die Düsenöffnungen unter verschiedenen Winkeln radial relativ zu einer Mittellinie durch die Düsenspitze sowie axial relativ zu einer zur Mittelline der Düsenspitze senkrecht befindlichen Ebene bereitgestellt sind, und dass die Düsenöffnungen mit dem größten Winkel relativ zu der zur Mittellinie der Düsenspitze senkrecht befindlichen Ebene am nächsten zum Injektorgehäuse angeordnet sind, wobei sichergestellt ist, dass die Mitte der Schmierölstrahlen an der Zylinderwand auf gleicher Höhe über dem Injektor, aber in unterschiedlichen Bereichen der Peripherie der Zylinderwand auftrifft.

2. Injektor nach Anspruch 1, **dadurch gekennzeichnet, dass** die Düsenöffnungen unterschiedliche Größen haben.

3. Injektor nach Anspruch 2, **dadurch gekennzeichnet, dass** die größten Düsenöffnungen am nächsten zum Injektorgehäuse angeordnet sind.

4. Injektor nach einem der vorhergehenden Ansprüche, **dadurch gekennzeichnet, dass** die Düsenöffnungen des Injektors unterschiedliche Größen haben, so dass die Kontaktfläche eines Schmierölstrahls, vorzugsweise in der Form eines Sprühnebels, auf der Zylinderwand proportional zu den Düsenöffnungen und damit zu der dosierten Menge an Schmieröl wird.

5. Injektor nach einem der vorhergehenden Ansprüche, **dadurch gekennzeichnet, dass** die Düsenöffnungen des Injektors unterschiedliche Größen haben, so dass unterschiedliche Schmierölstrahlen in der Form von Sprühnebel entsprechend unterschiedliche Tröpfchengrößen haben, und so dass der Spritzstrahl mit dem kürzesten Weg kleinere Tröpfchen hat und der Spritzstrahl mit dem längsten Weg größere Tröpfchen hat.

6. Injektor nach einem der vorhergehenden Ansprüche, **dadurch gekennzeichnet, dass** der Injektor ein integriertes Ventil mit einem Ventilkörper und einen Ventilsitz zum Öffnen und Schließen der Injektion umfasst.

7. Injektor nach Anspruch 6, **dadurch gekennzeichnet, dass** das Ventil ein Zerstäuberventil ist, und dass der Ventilsitz zwischen dem Ventilkörper und den Düsenöffnungen bereitgestellt ist.

8. Injektor nach Anspruch 6, **dadurch gekennzeichnet, dass** das Ventil ein Rückschlagventil ist, und dass der Ventilsitz zwischen dem Ventilkörper und den Düsenöffnungen bereitgestellt ist.

9. Injektor nach einem der vorhergehenden Ansprüche, **dadurch gekennzeichnet, dass** er zwei Düsenöffnungen umfasst.

10. Anwendung eines Injektors nach einem der vorhergehenden Ansprüche in einem Dosiersystem zum Injizieren von Zylinderschmieröl in die großen Zylinder in einem Dieselmotor, z.B. bei Schiffsmotoren, wobei eine Reihe von Injektoren in einer Zylinderwand und in einer senkrecht zur Achse des Zylinders befindlichen Ebene angeordnet sind

**Revendications**

1. Injecteur pour injecter de l'huile de lubrification de cylindre dans de grands cylindres dans un moteur diesel, par exemple, dans des moteurs marins, et pour utilisation dans un système d'injecteur où un certain nombre d'injecteurs sont agencés dans une paroi de cylindre et dans un plan perpendiculaire à l'axe dudit cylindre pour distribuer des jets d'huile de lubrification sur ladite paroi cylindrique et où ledit injecteur comporte un carter d'injecteur et une pointe de buse placée dans le prolongement du carter d'injecteur, la pointe de buse étant dotée à son extrémité libre de plusieurs ouvertures de buse pour distribuer plusieurs jets d'huile de lubrification dans différentes directions respectives, **caractérisé en ce que** les ouvertures de buse sont placées sous différents angles radialement par rapport à une ligne médiane à travers la pointe de buse ainsi qu'axialement par rapport à un plan perpendiculaire à la ligne médiane de la pointe de buse et **en ce que** les ouvertures de buse ayant le plus grand angle par rapport au plan perpendiculaire à la ligne médiane de la pointe de buse sont disposées le plus près du logement d'injecteur, moyennant quoi on obtient que le centre des jets d'huile de lubrification vient frapper, sur ladite paroi de cylindre, au même niveau au-dessus de l'injecteur mais au niveau de surfaces différentes d'une périphérie de ladite paroi de cylindre.

2. Injecteur selon la revendication 1, **caractérisé en ce que** les ouvertures de buse sont dotées de tailles différentes.

3. Injecteur selon la revendication 2, **caractérisé en ce que** les ouvertures de buse les plus grandes sont disposées le plus près du carter d'injecteur.

4. Injecteur selon une quelconque revendication précédente, **caractérisé en ce que** les ouvertures de buse de l'injecteur ont différentes tailles de telle sorte que la surface de contact d'un jet d'huile de lubrification, de préférence sous la forme d'une pulvérisation atomisée, sur la paroi de cylindre devient proportionnelle aux ouvertures de buse et ainsi, à la quantité dosée d'huile de lubrification.

5. Injecteur selon une quelconque revendication précédente, **caractérisé en ce que** les ouvertures de buse de l'injecteur ont des tailles différentes de telle sorte que des jets d'huile de lubrification différents sous la forme de pulvérisations atomisées sont dotés de différentes tailles de gouttelettes, respectivement, et de telle sorte que la pulvérisation ayant la trajectoire la plus courte est dotée de plus petites gouttelettes et la pulvérisation ayant la trajectoire la plus longue est dotée de plus grosses gouttelettes.

6. Injecteur selon une quelconque revendication précédente, **caractérisé en ce que** l'injecteur comporte une soupape intégrée avec un corps de soupape et un siège de soupape pour ouvrir et fermer l'injection.

7. Injecteur selon la revendication 6, **caractérisé en ce que** la soupape est une soupape d'atomisation et **en ce que** le siège de soupape est placé entre le corps de soupape et les ouvertures de buse.

8. Injecteur selon la revendication 6, **caractérisé en ce que** la soupape est une soupape anti-retour et le corps de soupape est placé entre le siège de soupape et les ouvertures de buse.

9. Injecteur selon une quelconque revendication précédente, **caractérisé en ce qu'**il comporte deux ouvertures de buse.

10. Utilisation d'un injecteur selon une quelconque revendication précédente dans un système de dosage pour injecter de l'huile de lubrification de cylindre dans de grands cylindres dans un moteur diesel, par exemple, des moteurs marins, où un certain nombre d'injecteurs sont agencés dans une paroi de cylindre et dans un plan perpendiculaire à l'axe dudit cylindre

# Fig. 1

# Fig. 2

# Fig. 3

EP 2 689 113 B1

Fig. 4a

Fig. 4b

Fig. 5a

Detail A ( 5 : 1 )

Detail B ( 2 : 1 )

Fig. 5b

Fig. 5c

Fig. 6a

O1 (Lube oil covered area in longituanl direction 1st spray)

O2 (Lube oil covered in longitunal direction for 2nd jet/spray )

$$\left(\frac{D1}{D2}\right)^{\wedge}2 \sim \left(\frac{O1}{O2}\right) \times \text{Const}$$

$$L1 \sim L2$$

$$\left(\frac{P1}{P2}\right) \sim \left(\frac{O1}{O2}\right) \times \text{Const}$$

20.1    20.2    20.3    20.4

V1*

V1

V2

8.1

H

V2*

8.2

5

P1

P2

$$P1 = H \times (\tan(v1^* + v1/2) - \tan(v1^* - v1/2))$$
$$P2 = H \times (\tan(v2^* + v2/2) - \tan(v2^* - v2/2))$$

Fig. 6b

5

Section A

Section B

Section A ( 5 : 1 )    5

D1    L1

Section B ( 5 : 1 )    5

D2    L2

Fig. 6c

20.1  20.2  20.3  20.4

8

**REFERENCES CITED IN THE DESCRIPTION**

**Patent documents cited in the description**

- EP 1350929 A
- WO 0028194 A
- EP 2044300 A
- EP 1426571 A